# EUROPEAN PATENT APPLICATION

(11) **EP 4 632 107 A1**
(43) Date of publication of application: **15.10.2025**
(21) Application number: 24169725.9
(22) Date of filing: 11.04.2024
(51) Int. Cl.: C25B 1/04, C25B 1/22, C25B 11/054, C25B 9/23, C25B 11/081, C25B 13/08, C02F 1/00, C25B 15/08

(54) **A METHOD FOR PRODUCING HYDROGEN GAS FROM NON-PURIFIED WATER VIA SULPHUR DEPOLARIZED ELECTROLYSIS (SDE)**

(71) Applicant: Technische Universität Graz, 8010 Graz (AT)
(72) Inventor: Bodner, Merit, 8042 Graz (AT); Roessler Escudero, Lukas Fernando, 8010 Graz (AT)
(74) Representative: Patentanwaltskanzlei Matschnig & Forsthuber OG

(57) **Abstract**

A method for producing hydrogen gas from non-purified water via sulphur depolarized electrolysis (SDE), said method comprises the steps of providing at least one electrochemical cell (2), which comprises at least one positive electrode (A) and at least one negative electrode (C), separated by a proton conductive membrane (3), non-purified water supply means (51) configured to supply non-purified water to the cathode, sulphur dioxide supply means (S2) configured to supply sulphur dioxide to the anode, electrical connecting means (4) configured to connect the anode (A) and the cathode (C) to an external power source (P), supplying non-purified water to the cathode, supplying sulphur dioxide to the anode, applying a voltage of at least 0.45 V and up to 1.37 V to the electrodes (A, C) to cause an electrolysis reaction that produces hydrogen gas at the cathode and sulphuric acid at the anode, removing produced hydrogen gas from the cathode and produced sulphuric acid from the anode.

## Description

### Field of the Invention

The invention relates to a method for producing hydrogen gas from non-purified water via sulphur depolarized electrolysis (SDE).

The invention also relates to a device for producing hydrogen gas from non-purified water via sulphur depolarized electrolysis (SDE).

### Background

Many attempts throughout the last decade have been made to improve the possibility of electrolysis with non-purified water such as seawater. Most were based on traditional PEM (Proton Exchange Membrane) water electrolysis. However, the presence of anions such as chloride, bromide and iodide lead to their respective evolution reactions. These occur at lower voltages than the oxygen evolution reaction (OER) takes place, making the electrolysis cell unsustainable even in short time spans. Alternative paths towards seawater electrolysis have been proposed recently. These are usually approaching the problem by the use of alkaline electrolysers. There, with an electrolyte pH of over 8, the halogen evolution reactions are thermodynamically impossible as long as the cell voltage doesn't exceed 1.6 V. However, this results in a lower realizable cell efficiency. A method for hydrogen production from seawater according to the prior art is disclosed in WO 2023/187781 A1.

It is an object of the invention to provide an improved method and an improved device for producing hydrogen gas from non-purified water via sulphur depolarized electrolysis.

To achieve this object, a method according to claim 1 and a device according to claim 10 are provided.

### Summary of the Invention

According to a first aspect of the invention, a method for producing hydrogen gas from non-purified water via sulphur depolarized electrolysis comprises the steps of:
providing at least one electrochemical cell, said electrochemical cell comprises:
   an anode side comprising at least one positive electrode (anode) and a cathode side comprising at least one negative electrode (cathode), wherein said anode side is separated from said cathode side by a proton conductive membrane, wherein the proton conductive membrane is configured to allow passage of protons and water molecules therethrough,
   non-purified water supply means configured to supply non-purified water to the cathode side, and first withdrawal means configured to withdraw SDE reduction products, in particular hydrogen gas, from the cathode side,
   sulphur dioxide supply means configured to supply sulphur dioxide to the anode side, and second withdrawal means configured to withdraw SDE oxidation products, in particular sulphuric acid, from the anode side,
   electrical connecting means configured to connect the at least one anode and the at least one cathode to an external power source, and to provide an electrical connection between the anode and the cathode, said electrical connection allows electrons conducting from the anode to the cathode,
supplying non-purified water via the non-purified water supply means to the cathode side,
supplying sulphur dioxide via the sulphur dioxide supply means to the anode side,
applying a voltage of at least 0.45 V and up to 1.37 V to the electrodes of the electrochemical cell, said voltage is provided by an external power source and transmitted to the electrodes of the electrochemical cell via the electrical connection means, to cause an electrolysis reaction that produces
   hydrogen gas at the cathode side via reduction of protons conducted through the proton conductive membrane from the anode side to the cathode side, wherein said reduction is enabled by recombination of protons with electrons, said electrons are received by electron conduction established between the anode and the cathode,
   and sulphuric acid at the anode side via oxidation of sulphur dioxide at the anode, said oxidation is enabled by sulphur dioxide, which was received by the sulphur dioxide supply means, reacting with water molecules, which diffused through the membrane from the cathode side to the anode side,
removing produced hydrogen gas from the cathode side via the first withdrawal means, and
removing produced sulphuric acid from the anode side via the second withdrawal means.

Advantageously, the voltage applied to the electrodes to enable the electrolysis is between 0.45 V and 1.37 V, preferably between 0.6 and 1.23 V.

Advantageously, solid matter is removed from the non-purified water by filtering means prior to feeding the non-purified water via the non-purified water supply means to the cathode, wherein preferably the filter means have a pore size between 0.5 µm and 50 µm, and/or wherein copper ions are removed from the non-purified water by separation means prior to feeding the non-purified water via the non-purified water supply means to the cathode. The filtering means can be part of the non-purified water supply means.

Advantageously, the non-purified water is selected from the group consisting of saline water, sea water, tap water, brackish water, and combinations thereof. The non-purified water may comprise thermal water, in particular thermal water from natural sources.

Advantageously, the sulphur dioxide is supplied to the anode in pure or diluted form, wherein preferably the sulphur dioxide purity is between 10% and 99.99%, in particular greater than 99%.

Advantageously, produced hydrogen gas and excess non-purified water is drawn off via the first withdrawal means and transferred into a first reservoir, in which produced hydrogen gas and excess non-purified water are collected and separated from each other, wherein preferably the excess non-purified water separated from the hydrogen gas is fed back to the cathode side.

Advantageously, produced sulphuric acid and excess sulfur dioxide is drawn off via the second withdrawal means and transferred into a second reservoir, in which produced sulphuric acid and excess sulfur dioxide are collected and separated from each other, wherein preferably the excess sulfur dioxide separated from the sulphuric acid is fed back to the anode side.

Advantageously, sulphur dioxide supplied via the sulphur dioxide supply means to the anode side, which has a temperature between 15°C and 220 °C, wherein preferably sulphur dioxide is supplied at a pressure between 1 bar and 3 bar absolute.

Advantageously, non-purified water supplied via the non-purified water supply means to the cathode side has a temperature between 4°C and 90 °C, in particular between 40°C and 80°C, wherein preferably non-purified water is supplied at a pressure between 1 bar and 3 bar absolute, wherein preferably the non-purified water is supplied at a flow rate of at least 2 ml*min⁻¹cm⁻². The non-purified water may comprise a temperature greater than 100 °C.

According to a second aspect of the invention, a device for producing hydrogen gas from non-purified water via sulphur depolarized electrolysis (SDE) is provided, said device comprises:
at least one electrochemical cell, said electrochemical cell comprises:
   an anode side comprising at least one positive electrode (anode) and a cathode side comprising at least one negative electrode (cathode), wherein said anode side is separated from said cathode side by a proton conductive membrane, wherein the proton conductive membrane is configured to allow passage of protons and water molecules therethrough,
   non-purified water supply means configured to supply non-purified water to the cathode side, and first withdrawal means configured to withdraw SDE reduction products, in particular hydrogen gas, from the cathode side,
   sulphur dioxide supply means configured to supply sulphur dioxide to the anode side, and second withdrawal means configured to withdraw SDE oxidation products, in particular sulphuric acid, from the anode side,
   electrical connecting means configured to connect the at least one anode and the at least one cathode to an external power source, and to provide an electrical connection
   between the anode and the cathode, said electrical connection allows electrons conducting from the anode to the cathode,
wherein the device is configured to apply a voltage of at least 0.45 V and up to 1.37 V from an external power source via the electrical connecting means to the electrodes of the electrochemical cell to cause an electrolysis reaction that produces
   hydrogen gas at the cathode side via reduction of protons conducted through the proton conductive membrane from the anode side to the cathode side, wherein said reduction is enabled by recombination of protons with electrons, said electrons are received by electron conduction established between the anode and the cathode,
   and sulphuric acid at the anode side via oxidation of sulphur dioxide at the anode, said oxidation is enabled by sulphur dioxide, which was received by the sulphur dioxide supply means, reacting with water molecules, which diffused through the membrane from the cathode side to the anode side,
wherein produced hydrogen gas is removable from the cathode side via the first withdrawal means, wherein produced sulphuric acid is removeable from the anode side via the second withdrawal means.

Advantageously, the electrochemical cell comprises two half cells facing each other, wherein the proton conductive membrane is located between the two half cells, wherein each half cell comprises a multi-layered structure, wherein a first half cell comprises a conductive plate layer acting as the anode and a second half cell comprises a conductive plate layer acting as the cathode, wherein preferably additional layers of each half cell comprise one or more of the following: a gasket layer, a current collector layer, an insulator layer, a pressure plate, and at least one or a plurality of porous conductive layers. Preferably, the proton conductive membrane comprises a porous conductive layer. Advantageously, a graphite felt layer comprising another porous conductive layer is located between the proton conductive membrane and a gasket layer.

Advantageously, the electrochemical cell comprises inert gas supply means, which are connected to the sulphur dioxide supply means via a valve, said valve is configured to switch between sulphur dioxide supply and inert gas supply to the anode, wherein preferably inert gas is supplied at a pressure greater than 3 bar absolute, wherein preferably the inert gas comprises nitrogen, helium, neon, argon, krypton, xenon, or radon.

Advantageously, the at least one cathode and/or the at least one anode comprise a conductive electrode, comprising materials such as carbon-based compounds.

Advantageously, the proton conductive membrane comprises a catalyst layer coated thereon, said catalyst layer comprises Pt, Au, Pt/C, Au/C or combinations thereof, wherein the proton conductive membrane comprises sulphonated fluoropolymers, hydrocarbon membranes or polybenzimidazole (PBI).

Advantageously, the device comprises temperature control means, configured to control the temperature of non-purified water prior to the suppliance of non-purified water to the cathode side and/or the temperature of sulphur dioxide prior to the suppliance of sulphur dioxide to the anode side and/or the temperature of the electrochemical cell, preferably an inside portion of the electrochemical cell, in particular where the electrolysis reaction takes place, wherein preferably the device comprises flow rate control means, configured to control the flow rate of non-purified water to the cathode side, wherein the flow rate is greater than 2 ml*min⁻¹cm⁻².

### Short Description of the Drawings

In the following, in order to further demonstrate the present invention, illustrative and non-restrictive embodiments are discussed, as shown in the drawings, which show:
Fig. 1 a schematic side view of an embodiment of a device according to the invention;
Fig. 2 a schematic side view of a half-cell of the device of Fig. 1;
Fig. 3 a process diagram of a method according to the invention;
Fig. 4 diagram showing electrolysis reactions;
Fig. 5a to 5c diagrams of in-situ experimental data for different types of non-purified water.

### Detailed Description of Embodiments

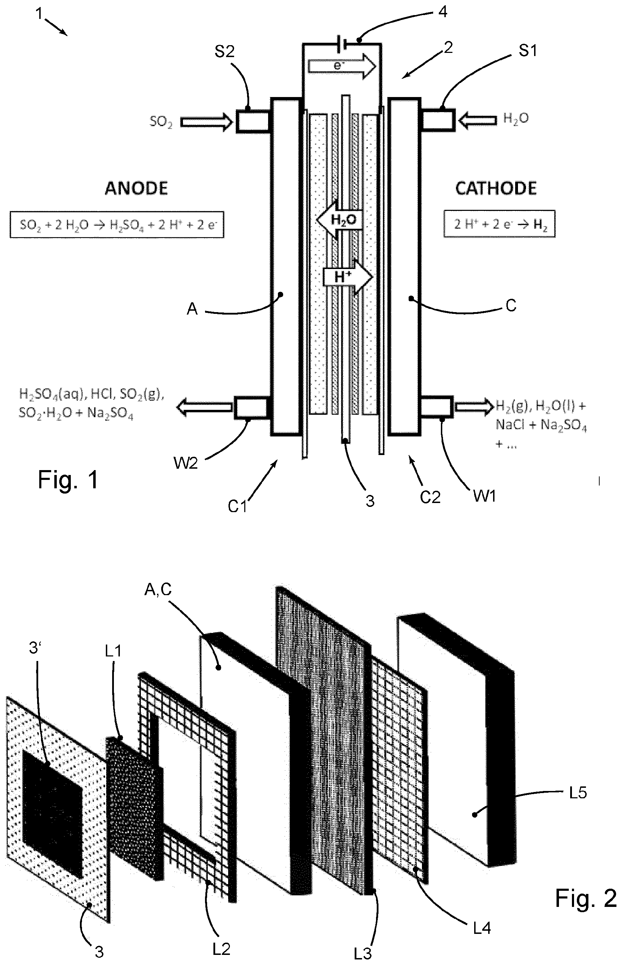

Fig. 1 shows a device 1 for producing hydrogen gas from non-purified water via sulphur depolarized electrolysis (SDE). The device 1 comprises at least one electrochemical cell 2 that comprises an anode side comprising at least one positive electrode A (anode) and a cathode side comprising at least one negative electrode C (cathode). The anode side is separated from the cathode side by a proton conductive membrane 3. The proton conductive membrane 3 is configured to allow passage of protons (indicated by *"*H⁺*"*) and water molecules (indicated by *"*H₂O*"*) therethrough.

The device 1 comprises non-purified water supply means S1 configured to supply non-purified water to the cathode side (the supply of H₂O to the cathode side is indicated by the arrow on the top of the cathode side), and first withdrawal means W1 configured to withdraw SDE reduction products, in particular hydrogen gas, from the cathode side during the SDE reaction (the withdrawal of H₂ and additional reaction products from the cathode is indicated by the arrow on the bottom of the cathode side).

The device 1 further comprises sulphur dioxide supply means S2 configured to supply sulphur dioxide to the anode side (the supply of SO₂ to the anode side is indicated by the arrow on the top of the anode side), and second withdrawal W2 means configured to withdraw SDE oxidation products, in particular sulphuric acid, from the anode side during the SDE reaction (the withdrawal of H₂SO₄ and additional reaction products from the anode is indicated by the arrow on the bottom of the anode side).

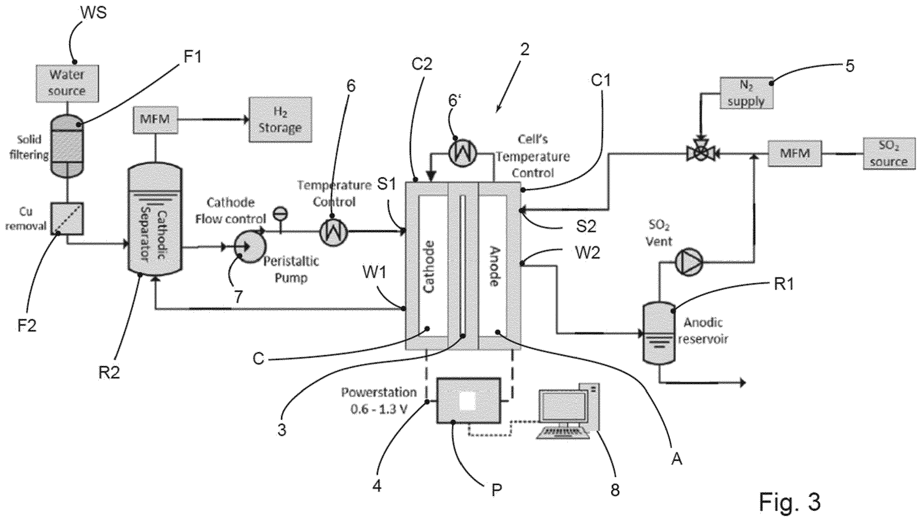

The device 1 further comprises electrical connecting means 4 configured to connect the at least one anode A and the at least one cathode C to an external power source (see Fig. 3). The electrical connection means 4 also provide an electrical connection between the anode A and the cathode C to allow electrons (indicated by "e-"on the top of the electrochemical cell) conducting from the anode to the cathode during the SDE reaction. The device 1 is configured to apply a voltage of at least 0.45 V and up to 1.37 V from an external power source via the electrical connecting means 4 to the electrodes A, C of the electrochemical cell 2 to cause an electrolysis reaction. For a person skilled in the art, it is clear that the device as well as the method according to the invention can be controlled by a controller unit comprising a processor (e.g., microcontroller, PC, or similar), wherein the method steps can be executed automatically, by respective control signals from the controller unit.

The electrolysis reaction produces hydrogen gas at the cathode side via reduction of protons conducted through the proton conductive membrane 3 from the anode side to the cathode side (the chemical equation is indicated on the cathode side). The reduction is enabled by recombination of protons with electrons, said electrons are received by electron conduction established between the anode and the cathode. The electrolysis reaction also produces sulphuric acid at the anode side via oxidation of sulphur dioxide at the anode. The oxidation is enabled by sulphur dioxide, which was received by the sulphur dioxide supply means, reacting with water molecules, which diffused through the membrane from the cathode side to the anode side (the chemical equation is indicated on the anode side). Produced hydrogen gas is removable from the cathode side via the first withdrawal means W1, and produced sulphuric acid is removeable from the anode side via the second withdrawal means W2.

The electrochemical cell 2 comprises two half cells C1, C2 facing each other. The proton conductive membrane is located between the two half cells and separates the half-cells.

Fig. 2 shows a schematic view of a half-cell C1. The half-cell comprises a multi-layered structure, comprising a conductive plate layer acting as the anode A (or the cathode C). The half-cell C1 further comprises a gasket layer L2, a current collector layer L3, an insulator layer L4, a pressure plate L5, and an additional porous conductive layer, in particular a gas diffusion layer L1. The half-cell C1 may also comprise additional porous conductive layers (not shown). The proton conductive membrane 3 comprises a catalyst layer (3') coated thereon, said catalyst layer comprises Pt, Au, Pt/C, Au/C or combinations thereof. The proton conductive membrane 3 further comprises sulphonated fluoropolymers, hydrocarbon membranes or polybenzimidazole (PBI). In terms of layers, the half-cell C1 and the half-cell C2 are essentially identical, wherein one half-cell comprises the anode A and the other half-cell comprises the cathode C.

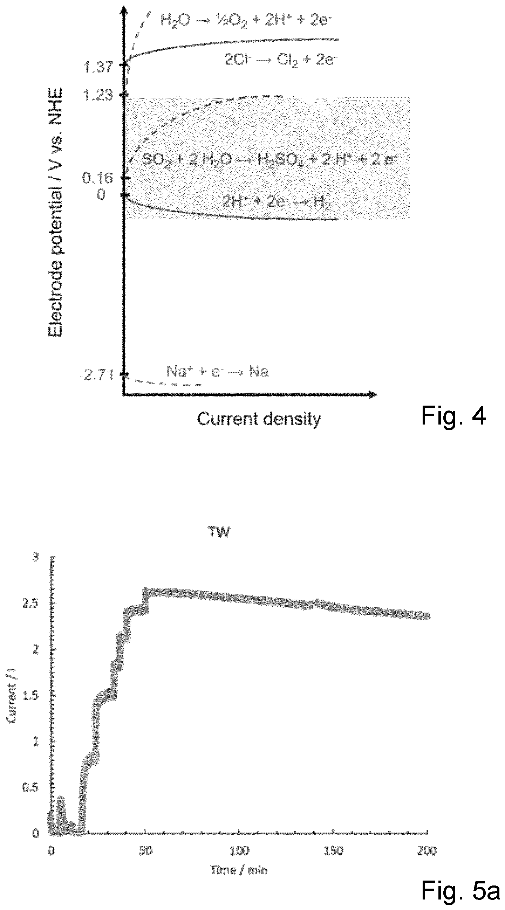

Table 1 shows potential cell components with their respective description, used materials in the experiments (see Fig. 5a to 5c and table 2), and potential options for different materials.

**Table 1**

| **Cell Components** | **Description** | **Used materials** | **Material options** |
|---|---|---|---|
| Proton conductive Membrane (MEA) | Assembly of the proton conductive membrane (PM) with the catalyst layer (CL) coated on it or onto gas diffusion electrodes (GDEs) | Nafion 212, Sigma Aldrich, Platinum on Vulcan XC 72R 0,3 mg/cm² Pt/C on anode and cathode | PM: sulphonated fluoropolymers, hydrocarbon membranes, PBI, or similar, with and without reinforcement; CL: Pt, Au, Pt/C, Au/C as well as mixtures |
| Graphite felt | Gas diffusion layer or porous transport layer | SGL 22 BB carbon paper by Sigracet | Carbon paper, carbon cloth, carbon felt, metallic sintered fibres, metal foams or similar |
| Gasket | The sealing material separates the electrochemical cell from the exterior and prevents leakages | 35 FC-PO100 ice cube sealing by Freudenberg | Silicone, PTFE, FKM, rubber, Kapton, polyolefin |
| Graphite plate | Conductive plate that contains the flow field and the media inlets as well as coolant flow fields in stacks | Graphite composite on anode and cathode | Graphite, graphite composite, stainless steel, aluminium, other metal alloys |
| Current collector | Conductive plates | Au coated Cu | Copper, coated Cu, gold, graphite |
| Insulator | Insulation layer to electrically isolate the electrochemical cell from the exterior | PTFE | PTFE, rubber, FKM, Kapton |
| Pressure plate | Gives rigidity and mechanical strength to the cell, the bolts to close the cell are screwed in this component. Single cells furthermore contain means for temperature control (heating plates or channels for tempering media) | Stainless steel | Stainless steel, aluminium, composites, polymers |

Fig. 3 shows a process diagram of a method according to the invention which utilizes a device 1. Arrowed lines between process parts/devices indicate the flow direction of the respective product (e.g. SO₂ or non-purified water). Centered in the process diagram is the electrochemical cell 2 (comprising two half-cells C1, C2, separated by the proton conductive membrane 3) as described above. Non-purified water is fed to the cathode side of the electrochemical cell 2, and sulfur dioxide is fed to the anode side of the electrochemical cell 2.

At the lower side of the electrochemical cell 2, the first withdrawal means W1 and the second withdrawal means W2 are indicated and configured to withdraw the products of the electrolysis from the electrochemical cell 2 into corresponding reservoirs (anodic reservoir R1, cathodic reservoir R2). The anodic reservoir R1 is configured to separate the anodic reaction products, wherein a portion of the withdrawn products, in particular SO₂, is recycled and fed back to the electrochemical cell 2 via the corresponding supply means S2.

The cathodic reservoir R3 is configured to separate the cathodic reaction products, wherein a portion of the withdrawn products, in particular non-purified water, is recycled and fed back to the electrochemical cell 2 via the corresponding supply means S1.

Produced H₂ is separated from the cathodic reservoirs R2 and stored in a H₂ storage. Likewise, produced H₂SO₄ is separated from the bottom of the anodic reservoirs R1 and stored in a H₂SO₄ storage.

At the anode side, inert gas supply means 5 are connected to the electrochemical cell 2. A valve is configured to switch between sulphur dioxide supply and inert gas supply to the anode. The inert gas in the shown embodiment is Nitrogen and is used for flushing the electrochemical cell 2 prior to the electrolysis or to dilute the sulphur dioxide feed.

At the cathode side, temperature control means 6 are located, configured to control the temperature of non-purified water prior to the suppliance of non-purified water to the cathode side. Furthermore, flow rate control means 7 are located at the cathode side, configured to control the flow rate of non-purified water to the cathode side, wherein the flow rate is greater than 2 ml*min⁻¹cm⁻². Temperature control means and flow rate control means may also be used at the anode side.

The non-purified water is extracted from a water source WS, which is connected to a solid filter F1, which removes solid particles (indicated by "Solid filtering"). Downstream of the solid filter F2, separation means F2 receive the solid filtered non-purified water, said separation means F2 are configured to remove copper ions from the non-purified water prior to feeding the non-purified water via the non-purified water supply means S1 to the cathode C. Downstream of the separation means F2 is the cathodic reservoir R2, which receives the filtered and copper separated non-purified water, which is subsequently conducted through to the flow rate control means 7 and the temperature control means 6 and further to the electrochemical cell 2.

On the top of the electrochemical cell 2, additional cell temperature control means 6' are indicated, which are configured to control the temperature of the electrochemical cell 2. At the bottom of the electrochemical cell 2, the electrical connecting means 4 are indicated, which are configured to connect the anode A and the cathode C to the external power source P (the connection to the power source P is indicated by a dashed line). The power source P is further connected to a computer 8 (the connection to the computer 8 is indicated by a dotted line). The computer 8 can be configured to control the device 1, including some or all components of the device 1. The computer 8 can also be configured to control the method steps, in particular the steps leading to the electrolysis products, and to evaluate results from the electrolysis.

Fig. 4 shows a diagram of possible electrolysis reactions and at which voltage those reactions take place. The device 1 and method according to the invention takes place in a range between 0.45 V and up to 1.37 V. Above 1.37 V, an unwanted chlorine reaction takes place. Due to the preferred voltage range of the method according to the invention, the chlorine reaction is prohibited and therefore, no hazardous chlorine gas is produced with the method.

### Experimental results

Three proof of concept tests were conducted to evaluate the feasibility of the process, labelled as tap water (TW) plus the added type of salt, being either table salt (TS) or sea salt (SS). The details of the tests are summarized in Table 2. The resulting performances over a test duration of more than 200 minutes are depicted in Figs. 5a to 5c.

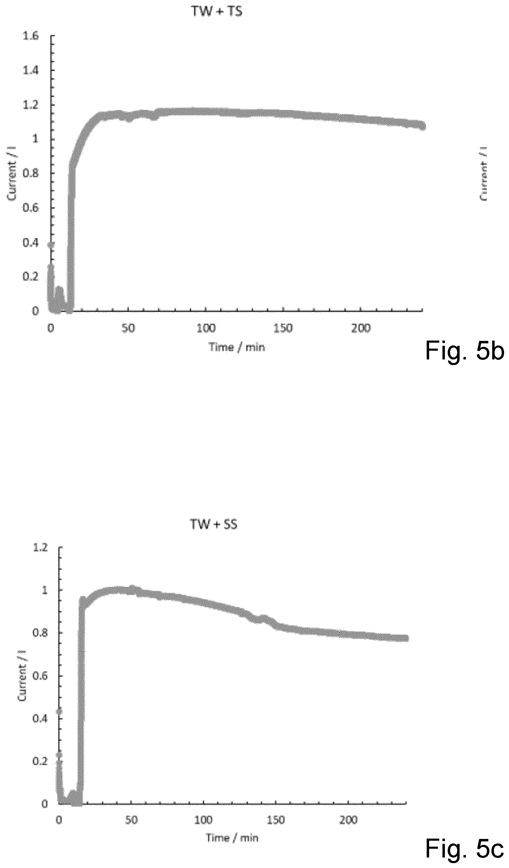

In particular, Fig. 5a to 5c show diagrams (current vs time) of electrolysis reactions done with a device and method according to the invention using different types of water. In Fig. 5a, tap water (TW; taken from the Austrian city Graz) was used. Fig. 5b shows the results using tap water and added table salt (TW + TS), at a concentration of 26.8 g/l table salt. Fig. 5c shows the results using a saturated solution of sea salt (SS) and tap water (TW).

In each test, first water was introduced, and the electrochemical cell was heated to the operational temperature. Then, the voltage was set to 1.2 V and only after conditions were stable, the SO₂ feed was started (hence the local minimum at the beginning of each diagram).

For the tap water experiment (Fig. 5a), the gas flow was not fixed. Instead, it was tested to increase the flow stepwise, with the intention of testing how high the current could go without increasing the voltage. The result was a maximum of 2.5 A or 500 mA/cm².

The test run with tap water and table salt (Fig. 5b) shows remarkable stability over the duration of the test. The test with sea salt (Fig. 5c) shows satisfying performance as well, through the current does decline over the duration of the test. However, it must be mentioned that in this test, the water was saturated with sea salt and thus, with the consumption of water, the precipitation of salt and thus blockage of porous layers of the electrochemical cell becomes an operational issue that can be addressed be increasing the flow rate of feed water.

Table 2 shows the experimental parameters for the reactions shown in Figs. 5a to 5c.

**Table 2**

| **Test** | **TW (tap water)** | **TW+TS (tap water + table salt)** | **TW+SS (tap water + sea salt)** |
|---|---|---|---|
| Applied Voltage | 1.2 V | 1.2 V | 1.2 V |
| Temperature | 60 °C | 60 °C | 60 °C |
| Duration | 200 min | 240 min | 240 min |
| Water flow | 8 ml/min | 8 ml/min | 8 ml/min |
| SO₂ flow | Variable | 10 Nml/min | 10 Nml/min |
| Comments | Graz tap water | 26.8 g/l of salt in water | 34.4 g/l of sea salt in water (saturated) |

The foregoing examples and described embodiments have been set forth merely to illustrate the invention and are not intended to be limiting. Individual aspects of the invention or the embodiments can also be taken up and combined with one another. Since modifications of the disclosed embodiments incorporating the substance of the invention may occur to those skilled in the art, the invention should be construed to include everything within the scope of the appended claims. Any reference signs in the claims are exemplary and serve only to make the claims easier to read without restricting them.

### LIST OF REFERENCE SYMBOLS

- 1: device
- 2: electrochemical cell
- 3: proton conductive membrane
- 3': catalyst layer
- 4: electrical connection means
- 5: inert gas supply means
- 6, 6': temperature control means
- 7: flow rate control means
- 8: computer
- A: anode
- C: cathode
- C1, C2: half-cell
- F1: filter means
- F2: separation means
- L1: porous conductive layer
- L2: gasket layer
- L3: current collector layer
- L4: insulator layer
- L5: pressure plate
- P: power source
- R1: first reservoir
- R2: second reservoir
- S1: non-purified water supply means
- S2: sulphur dioxide supply means
- W1: first withdrawal means
- W2: second withdrawal means
- WS: water source

## Claims

1. A method for producing hydrogen gas from non-purified water via sulphur depolarized electrolysis (SDE), said method comprises the steps of:
providing at least one electrochemical cell (2), said electrochemical cell (2) comprises:
an anode side comprising at least one positive electrode (A) and a cathode side comprising at least one negative electrode (C), wherein said anode side is separated from said cathode side by a proton conductive membrane (3), wherein the proton conductive membrane (3) is configured to allow passage of protons and water molecules therethrough,
non-purified water supply means (S1) configured to supply non-purified water to the cathode side, and first withdrawal means (W1) configured to withdraw SDE reduction products, in particular hydrogen gas, from the cathode side,
sulphur dioxide supply means (S2) configured to supply sulphur dioxide to the anode side, and second withdrawal means (W2) configured to withdraw SDE oxidation products, in particular sulphuric acid, from the anode side,
electrical connecting means (4) configured to connect the at least one anode (A) and the at least one cathode (C) to an external power source (P), and to provide an electrical connection between the anode (A) and the cathode (C), said electrical connection allows electrons conducting from the anode (A) to the cathode (C),
supplying non-purified water via the non-purified water supply means (S1) to the cathode side,
supplying sulphur dioxide via the sulphur dioxide supply means (S2) to the anode side,
applying a voltage of at least 0.45 V and up to 1.37 V to the electrodes (A, C) of the electrochemical cell (2), said voltage is provided by an external power source (P) and transmitted to the electrodes (A, C) of the electrochemical cell (2) via the electrical connection means (4), to cause an electrolysis reaction that produces
hydrogen gas at the cathode side via reduction of protons conducted through the proton conductive membrane (3) from the anode side to the cathode side, wherein said reduction is enabled by recombination of protons with electrons, said electrons are received by electron conduction established between the anode (A) and the cathode (C),
and sulphuric acid at the anode side via oxidation of sulphur dioxide at the anode, said oxidation is enabled by sulphur dioxide, which was received by the sulphur dioxide supply means (S2), reacting with water molecules, which diffused through the proton conductive membrane (3) from the cathode side to the anode side,
removing produced hydrogen gas from the cathode side via the first withdrawal means (W1), and removing produced sulphuric acid from the anode side via the second withdrawal means (W2).

2. The method of claim 1, wherein the voltage applied to the electrodes (A, C) to enable the electrolysis is between 0.45 V and 1.37 V, preferably between 0.6 and 1.23 V.

3. The method of any one of the preceding claims, wherein solid matter is removed from the non-purified water by filtering means (F1) prior to feeding the non-purified water via the non-purified water supply means (S1) to the cathode (C), wherein preferably the filter means (F1) have a pore size between 0.5 µm and 50 µm, and/or wherein copper ions are removed from the non-purified water by separation means (F2) prior to feeding the non-purified water via the non-purified water supply means (S1) to the cathode (C).

4. The method of any one of the preceding claims, wherein the non-purified water is selected from the group consisting of saline water, sea water, tap water, brackish water, and combinations thereof.

5. The method of any one of the preceding claims, wherein the sulphur dioxide is supplied to the anode in pure or diluted form, wherein preferably the sulphur dioxide purity is between 10% and 99.99%, in particular greater than 99%.

6. The method of any one of the preceding claims, wherein produced hydrogen gas and excess non-purified water is drawn off via the first withdrawal means (W1) and transferred into a first reservoir (R1), in which produced hydrogen gas and excess non-purified water are collected and separated from each other, wherein preferably the excess non-purified water separated from the hydrogen gas is fed back to the cathode side.

7. The method of any one of the preceding claims, wherein produced sulphuric acid and excess sulfur dioxide is drawn off via the second withdrawal means (W2) and transferred into a second reservoir (R2), in which produced sulphuric acid and excess sulfur dioxide are collected and separated from each other, wherein preferably the excess sulfur dioxide separated from the sulphuric acid is fed back to the anode side.

8. The method of any one of the preceding claims, wherein sulphur dioxide supplied via the sulphur dioxide supply means (S2) to the anode side, which has a temperature between 15°C and 220 °C, wherein preferably sulphur dioxide is supplied at a pressure between 1 bar and 3 bar absolute.

9. The method of any one of the preceding claims, wherein non-purified water supplied via the non-purified water supply means (S1) to the cathode side has a temperature between 4°C and 90 °C, in particular between 40°C and 80°C, wherein preferably non-purified water is supplied at a pressure between 1 bar and 3 bar absolute, wherein preferably the non-purified water is supplied at a flow rate of at least 2 ml*min⁻¹cm⁻².

10. A device (1) for producing hydrogen gas from non-purified water via sulphur depolarized electrolysis (SDE), said device comprises:
at least one electrochemical cell (2), said electrochemical cell (2) comprises:
an anode side comprising at least one positive electrode (A) and a cathode side comprising at least one negative electrode (C), wherein said anode side is separated from said cathode side by a proton conductive membrane (3), wherein the proton conductive membrane (3) is configured to allow passage of protons and water molecules therethrough,
non-purified water supply means (S1) configured to supply non-purified water to the cathode side, and first withdrawal means (W1) configured to withdraw SDE reduction products, in particular hydrogen gas, from the cathode side,
sulphur dioxide supply means (S2) configured to supply sulphur dioxide to the anode side, and second withdrawal means (W2) configured to withdraw SDE oxidation products, in particular sulphuric acid, from the anode side,
electrical connecting means (4) configured to connect the at least one anode (A) and the at least one cathode (A) to an external power source (P), and to provide an electrical connection between the anode (A) and the cathode (C), said electrical connection allows electrons conducting from the anode to the cathode,
wherein the device (1) is configured to apply a voltage of at least 0.45 V and up to 1.37 V from an external power source (P) via the electrical connecting means to the electrodes (A, C) of the electrochemical cell (2) to cause an electrolysis reaction that produces
hydrogen gas at the cathode side via reduction of protons conducted through the proton conductive membrane (3) from the anode side to the cathode side, wherein said reduction is enabled by recombination of protons with electrons, said electrons are received by electron conduction established between the anode (A) and the cathode (C),
and sulphuric acid at the anode side via oxidation of sulphur dioxide at the anode (A), said oxidation is enabled by sulphur dioxide, which was received by the sulphur dioxide supply means (S2), reacting with water molecules, which diffused through the proton conductive membrane (3) from the cathode side to the anode side,
wherein produced hydrogen gas is removable from the cathode side via the first withdrawal means (W1), wherein produced sulphuric acid is removeable from the anode side via the second withdrawal means (W2).

11. The device of claim 10, wherein the electrochemical cell (2) comprises two half cells (C1, C2) facing each other, wherein the proton conductive membrane (3) is located between the two half cells (C1, C2), wherein each half cell (C1, C2) comprises a multi-layered structure, wherein a first half cell (C1) comprises a conductive plate layer acting as the anode (A) and a second half cell (C2) comprises a conductive plate layer acting as the cathode (C), wherein preferably additional layers of each half cell (C1, C2) comprise one or more of the following: a gasket layer (L2), a current collector layer (L3), an insulator layer (L4), a pressure plate (L5), and at least one or a plurality of porous conductive layers (L1).

12. The device of claim 10 or 11, wherein the electrochemical cell (2) comprises inert gas supply means (5), which are connected to the sulphur dioxide supply means (S2) via a valve, said valve is configured to switch between sulphur dioxide supply and inert gas supply to the anode, wherein preferably inert gas is supplied at a pressure greater than 3 bar absolute, wherein preferably the inert gas comprises nitrogen, helium, neon, argon, krypton, xenon, or radon.

13. The device of any one of claims 10 to 12, wherein the at least one cathode and/or the at least one anode comprise a conductive electrode, comprising materials such as carbon-based compounds.

14. The device of any one of claims 10 to 13, wherein the proton conductive membrane (3) comprises a catalyst layer (3') coated thereon, said catalyst layer (3') comprises Pt, Au, Pt/C, Au/C or combinations thereof, wherein the proton conductive membrane (3) comprises sulphonated fluoropolymers, hydrocarbon membranes or polybenzimidazole (PBI).

15. The device of any one of claims 10 to 14, wherein the device (1) comprises temperature control means (6), configured to control the temperature of non-purified water prior to the suppliance of non-purified water to the cathode side and/or the temperature of sulphur dioxide prior to the suppliance of sulphur dioxide to the anode side, wherein preferably the device comprises flow rate control means (7), configured to control the flow rate of non-purified water to the cathode side, wherein the flow rate is greater than 2 ml*min⁻¹cm⁻².
